# EUROPEAN PATENT APPLICATION

(11) **EP 4 629 715 A1**
(43) Date of publication of application: **08.10.2025**
(21) Application number: 22966936.1
(22) Date of filing: 02.12.2022
(51) Int. Cl.: H04W 64/00, G01S 5/00

(54) **COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: CHEN, Jingran, Dongguan, Guangdong 523860 (CN)
(74) Representative: RGTH
(86) International application number: PCT/CN2022/136125
(87) International publication number: WO 2024/113348

(57) **Abstract**

Provided are a communication method and a communication apparatus. The method comprises: a first network element receives first information from a second network element, the first information being used for determining whether a positioning mode of a first electronic tag device is a simplified positioning mode. The method in embodiments of the present application facilitates reducing the resource overhead of a communication system.

## Description

### TECHNICAL FIELD

This application relates to the field of communications technologies, and more specifically, to a communication method and a communications apparatus.

### BACKGROUND

With development of communications technologies, electronic tag devices are introduced into some communications systems to reduce power consumption of the systems. However, positioning of the electronic tag devices consumes a large amount of system resources.

### SUMMARY

Embodiments of this application provide a communication method and a communications apparatus. The following describes various aspects involved in embodiments of this application.

According to a first aspect, there is provided a communication method. The communication method includes: receiving, by a first network element, first information from a second network element, where the first information is used to determine whether a positioning mode for a first electronic tag device is a simplified positioning mode.

According to a second aspect, there is provided a communication method. The communication method includes: transmitting, by a second network element, first information to a first network element, where the first information is used to determine whether a positioning mode for a first electronic tag device is a simplified positioning mode.

According to a third aspect, there is provided a communications apparatus. The communications apparatus includes: a receiving unit, configured to receive first information from a second network element, where the first information is used to determine whether a positioning mode for a first electronic tag device is a simplified positioning mode.

According to a fourth aspect, there is provided a communications apparatus. The communications apparatus includes: a transmitting unit, configured to transmit first information to a first network element, where the first information is used to determine whether a positioning mode for a first electronic tag device is a simplified positioning mode.

According to a fifth aspect, there is provided a communications apparatus. The communications apparatus includes a memory, a transceiver, and a processor, where the memory is configured to store a program, the processor is configured to perform data transmission and reception by using the transceiver, and the processor is configured to invoke the program in the memory to cause the communications apparatus to execute the method according to the first aspect.

According to a sixth aspect, there is provided a communications apparatus. The communications apparatus includes a memory, a transceiver, and a processor, where the memory is configured to store a program, the processor is configured to perform data transmission and reception by using the transceiver, and the processor is configured to invoke the program in the memory to cause the communications apparatus to execute the method according to the second aspect.

According to a seventh aspect, there is provided a communications apparatus. The communications apparatus includes a processor configured to invoke a program from a memory to cause the communications apparatus to execute the method according to the first aspect.

According to an eighth aspect, there is provided a communications apparatus. The communications apparatus includes a processor configured to invoke a program from a memory to cause the communications apparatus to execute the method according to the second aspect.

According to a ninth aspect, there is provided a chip. The chip includes a processor configured to invoke a program from a memory to cause a device installed with the chip to execute the method according to the first aspect.

According to a tenth aspect, there is provided a chip. The chip includes a processor, configured to invoke a program from a memory to cause a device installed with the chip to perform the method according to the second aspect.

According to an eleventh aspect, a computer-readable storage medium is provided, where a program is stored on the computer-readable storage medium, and the program causes a computer to execute the method according to the first aspect.

According to a twelfth aspect, a computer-readable storage medium is provided, where a program is stored on the computer-readable storage medium, and the program causes a computer to execute the method according to the second aspect.

According to a thirteenth aspect, a computer program product is provided, and includes a program, where the program causes a computer to execute the method according to the first aspect.

According to a fourteenth aspect, a computer program product is provided, and includes a program, where the program causes a computer to execute the method according to the second aspect.

According to a fifteenth aspect, a computer program is provided, where the computer program causes a computer to execute the method according to the first aspect.

According to a sixteenth aspect, a computer program is provided, where the computer program causes a computer to execute the method according to the second aspect.

In embodiments of this application, the first information is used to determine whether a positioning mode for the first electronic tag device is a simplified positioning mode. The first information is transmitted between network elements, so that a communications system can locate the first electronic tag device in the simplified positioning mode, thereby reducing resource overheads of the communications system.

### BRIEF DESCRIPTION OF DRAWINGS

FIG. 1 is an example diagram of a wireless communications system to which embodiments of this application are applied.
FIG. 2 is an example diagram of a 5GS architecture according to an embodiment of this application.
FIG. 3 is an example diagram of a positioning method according to an embodiment of this application.
FIG. 4 is an example diagram of a direct mode according to an embodiment of this application.
FIG. 5 is a schematic flowchart of a communication method according to an embodiment of this application.
FIG. 6 is a schematic flowchart of a communication method according to another embodiment of this application.
FIG. 7 is a schematic flowchart of a communication method according to still another embodiment of this application.
FIG. 8 is a schematic flowchart of a communication method according to still another embodiment of this application.
FIG. 9 is a schematic structural diagram of a communications apparatus according to an embodiment of this application.
FIG. 10 is a schematic structural diagram of a communications apparatus according to another embodiment of this application.
FIG. 11 is a schematic structural diagram of an apparatus according to an embodiment of this application.

### DESCRIPTION OF EMBODIMENTS

Technical solutions in this application are described below with reference to the accompanying drawings.

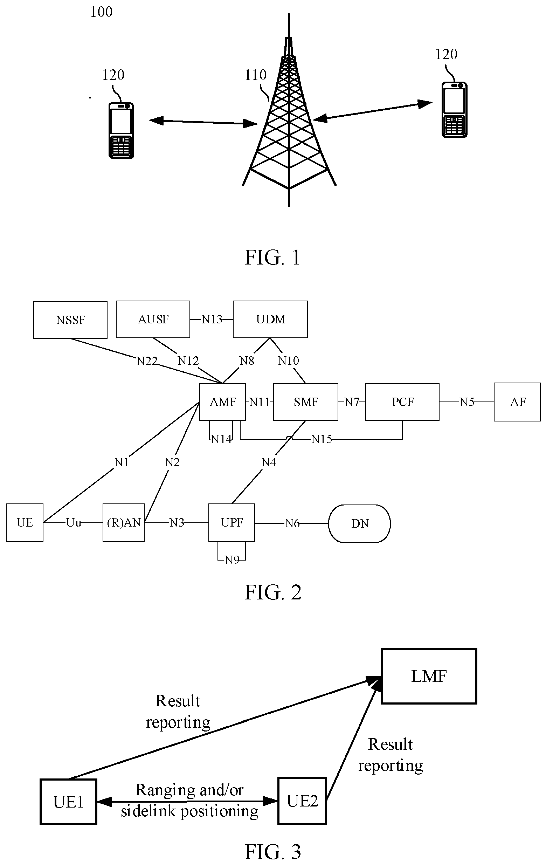

FIG. 1 shows a wireless communications system 100 to which embodiments of this application are applied. The wireless communications system 100 may include a network device 110 and a user equipment (user equipment, UE) 120. The network device 110 may communicate with the UE 120. The network device 110 may provide communication coverage for a specific geographic area, and may communicate with the UE 120 within the coverage. The UE 120 may access a network (for example, a wireless network) by using the network device 110.

FIG. 1 exemplarily shows one network device and two UEs. Optionally, the wireless communications system 100 may include a plurality of network devices, and another quantity of terminal devices may be included within coverage of each network device, which is not limited in embodiments of this application. Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and an LTE time division duplex (time division duplex, TDD) system. The technical solutions provided in this application may be further applied to a future communications system, such as a 6th generation mobile communications system or a satellite communications system.

The UE in embodiments of this application may also be referred to as a terminal device, an access terminal, a subscriber unit, a subscriber station, a mobile site, a mobile station (mobile station, MS), a mobile terminal (mobile Terminal, MT), a remote station, a remote terminal, a mobile device, a user terminal, a terminal, a wireless communications device, a user agent, or a user apparatus. The UE in embodiments of this application may be a device providing a user with voice and/or data connectivity and capable of connecting people, objects, and machines, such as a handheld device or vehicle-mounted device having a wireless connection function. The UE in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without the relay of a communication signal through a base station. Optionally, the UE in embodiments of this application may alternatively be an electronic tag device or another zero-power device. Optionally, the electronic tag device may be referred to as a zero-power device, an electronic tag (Tag), or the like.

The network device in embodiments of this application may be a device for communicating with the UE. The network device may also be referred to as an access network device or a radio access network device. For example, the network device may be a base station. The network device in embodiments of this application may be a radio access network (radio access network, RAN) node (or device) that connects the UE to a wireless network. The base station may broadly cover various names in the following, or may be replaced with the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof.

In some embodiments, the network device may be stationary or mobile. For example, a helicopter or an unmanned aerial vehicle may be configured to function as a mobile network device, and one or more cells may move depending on a location of the mobile network device. In other examples, a helicopter or an unmanned aerial vehicle may be configured to function as a device that communicates with another network device. In some embodiments, the network device may be a CU or a DU, or the network device may include a CU and a DU, or the network device may further include an AAU.

It should be understood that the network device may be deployed on land, including being indoors or outdoors, handheld, or vehicle-mounted, may be deployed on a water surface, or may be deployed on a plane, a balloon, or a satellite in the air. In embodiments of this application, the network device and a scenario in which the network device is located in embodiments of this application are not limited.

It should also be understood that all or some of functions of the network device and the UE in this application may also be implemented by software functions running on hardware, or by virtualization functions instantiated on a platform (for example, a cloud platform).

The solutions in embodiments of this application are described below using FIG. 2 as an example.

FIG. 2 is a diagram of an architecture of a 5G system (5G system, 5GS), which includes network elements such as a network slice selection function (network slice selection function, NSSF), an authentication server function (authentication server function, AUSF), unified data management (unified data management, UDM), an access and mobility management function (access and mobility management function, AMF), a session management function (session management function, SMF), a policy control function (policy control function, PCF), an application function (application function, AF), a UE, an access network element (access network, AN) (or a radio access network element (radio access network, RAN)), a user plane function, (user plane function, UPF), and a data network (data network, DN).

As shown in FIG. 2, a UE may establish an access stratum connection to the AN via a Uu interface to exchange access stratum messages and perform wireless data transmission, and the UE may establish a non-access stratum (NAS) connection to the AMF via an N1 interface to exchange NAS messages. The AMF is a mobility management function in a core network, and the SMF is a session management function in the core network. In addition to performing mobility management on the UE, the AMF is also responsible for forwarding a message related to session management between the UE and the SMF. The PCF is a policy management function in the core network, and may be responsible for formulating policies related to mobility management, session management, charging, and the like of the UE. The UPF is a user plane function in the core network, and may perform data transmission with an external data network via an N6 interface and may perform data transmission with the AN via an N3 interface. After accessing a 5G network via the Uu interface, the UE may establish a PDU session under control of the SMF for data transmission.

The embodiments of this application involve the UE in FIG. 2 (for example, an electronic tag device), an access network element (for example, a gNB), a control plane network element (for example, an AMF, or an AF), a UDM, and other network elements (for example, a location management function (location management function, LMF), or a gateway mobile location center (gateway mobile location center, GMLC)).

In a radio frequency identification (radio frequency identification, RFID) system, a reader/writer is an apparatus that reads information from an electronic tag (may also be referred to as an RFID tag) or writes information to the electronic tag. During RFID system operation, the reader/writer transmits radio frequency energy to form an electromagnetic field within a specific area, and a size of the area depends on transmit power. The electronic tag within coverage of the reader/writer is triggered to transmit data stored in the electronic tag, or modify, according to an instruction from the reader/writer, data stored in the electronic tag. The reader/writer performs contactless bidirectional data communication with the electronic tag through radio frequency, to read information from or write information to the electronic tag, thereby achieving target identification and data exchange. An electronic tag generally consumes little power and does not even require a power supply or a battery. For example, a passive electronic tag may temporarily obtain energy by receiving microwave signals transmitted by the reader/writer and acquiring energy through electromagnetic induction coils, thereby completing data exchange. RFID has a relatively short transmission range, and is applied to local management and communication of goods, such as management of goods in a warehouse, file management, door access card management, and highway electronic payment.

To reduce system power consumption, electronic tag devices (may also be referred to as electronic tags for short) are introduced in some communications systems. The electronic tag devices may alternatively be RFID tags, passive internet of things device (passive IoT) tags, or ambient internet of things device (ambient IoT) tags that operate using environmental energy. Electronic tag devices may also perform communication by using a frequency resource of a 3rd generation partnership project (3rd generation partnership project, 3GPP) network. An electronic tag device in embodiments of this application includes but is not limited to an RFID tag, a passive IoT tag, an ambient IoT tag, another electronic tag, another zero-power device, or the like.

The electronic tag device may be applied to a plurality of scenarios, for example, a warehouse logistics scenario or an item tracking scenario. In these scenarios, a location of the electronic tag device is required to be obtained. After the electronic tag device is introduced in the 3GPP network, the electronic tag device may be remotely located by using the 3GPP network, so as to facilitate a third party to learn an accurate location of the electronic tag device. However, an existing positioning method in a 3GPP network is relatively complex (in the existing positioning method, at least three base stations are required to locate a UE), and a large amount of resources are required to locate a UE, so as to meet a relatively high accuracy requirement.

Generally, a quantity of electronic tag devices is huge, leading to that locating for the electronic tag devices is required to be performed frequently and for a large quantity of times. In addition, the electronic tag devices generally have simple functions and do not require high positioning accuracy. In this case, if an existing positioning method is still used, a large amount of network resources are consumed, and a system burden is increased and resource waste is caused. Therefore, how to reduce resource overheads of a system in a positioning process has become a technical problem to be urgently resolved.

To resolve one or more of the foregoing technical problems, this application provides a communication method and a communications apparatus, where first information (for example, the first information is used to determine whether a positioning mode for a first electronic tag device is a simplified positioning mode) is transmitted between network elements, so that the first electronic tag device is located in the simplified positioning mode, thereby reducing resource overheads of a communications system.

Ranging (ranging) may refer to determining a distance between two or more terminals and/or a direction from one terminal (that is, a target terminal) to another terminal (that is, a reference terminal) via a PC5 interface. Sidelink positioning (sidelink positing) may refer to locating a UE via the PC5 interface, for example, determining a relative location, an absolute location, ranging-related information, or the like of the UE. In embodiments of this application, a relative location between two UEs and an absolute location of one UE may be used to determine an absolute location of the other UE.

For example, as shown in FIG. 3, when the LMF fails to locate UE 1 via the Uu interface by using an existing positioning mode in a 3GPP network, or positioning accuracy of UE 1 is not enough while the LMF can accurately locate UE 2, the LMF may calculate an absolute location of UE 1 by using a relative location between UE 1 and UE 2 and an accurate location of UE 2. When UE 1 is within network coverage, the relative location between UE 1 and UE2 may be reported to the LMF through UE 1. When UE 1 is outside network coverage, the relative location between UE 1 and UE2 may be reported to the LMF through UE 2. The relative location between UE 1 and UE 2 may be determined through ranging and/or sidelink positioning.

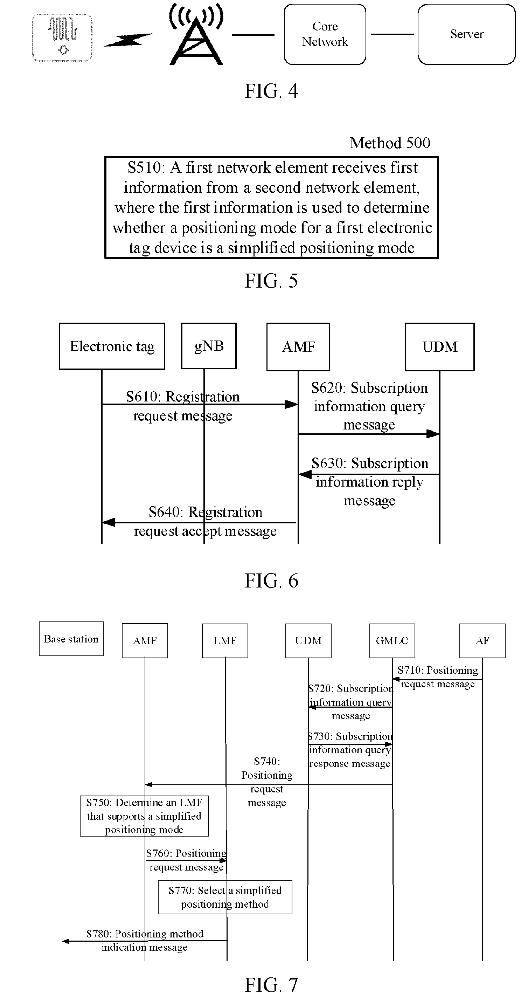

In embodiments of this application, the electronic tag device may be connected to a network in a direct mode (direct mode), or in another mode or manner. For example, an architecture of the direct mode may be as shown in FIG. 4. As shown in FIG. 4, the direct mode may refer to that the electronic tag device is directly connected to a base station. In this way, data from the electronic tag device may be exchanged through the base station, a core network (for example, a 5G core network (5GC)), and a corresponding server (for example, an ambient IoT server (server)). Optionally, the base station may be further equipped with a reader/writer function of an electronic tag. The base station may transmit information about an electronic tag collected by the base station to the core network, and a network element with a storage function in the core network or a dedicated network element may store an association between the base station and an identifier of the electronic tag.

With reference to FIG. 5 to FIG. 9, the following describes embodiments of this application in detail by using examples.

FIG. 5 is a schematic flowchart of a communication method according to an embodiment of this application. The method 500 shown in FIG. 5 may include step S510. Details are as follows.

In S510, a first network element receives first information from a second network element.

Optionally, a first electronic tag device may be an RFID tag, a passive IoT tag, or an ambient IoT tag, or may be another electronic tag, a zero-power device, or the like. The first electronic tag device may also be referred to as an electronic tag (Tag) for short.

Optionally, the first information may be used to determine whether a positioning mode for the first electronic tag device is a simplified positioning mode.

In the simplified positioning mode, only one base station is required to locate the electronic tag device. However, in a conventional positioning mode, at least three base stations are required to locate a UE. Therefore, compared with the conventional positioning mode (an existing positioning method in a 3GPP network), fewer resources may be used to locate the UE in the simplified positioning mode.

For example, to locate the electronic tag device in the simplified positioning mode, the first network element may transmit a physical layer signal to the electronic tag device. Accordingly, the electronic tag device may transmit (for example, reflect) a backscatter signal to the first network element. In this case, the first network element may calculate a relative distance and/or an angle (for example, ranging and/or sidelink positioning mentioned in the foregoing embodiment may be used) between the first network element and the electronic tag device based on a signal phase difference, a transmission timing difference, and the like between the physical layer signal and the reflected backscatter signal. Further, the first network element (or the second network element) may calculate a location of the electronic tag based on the relative distance and/or the angle between the first network element and the electronic tag device and a location of the first network element.

The first information may include a simplified positioning indication and/or an identifier (for example, Tag ID) of the first electronic tag device. Optionally, the simplified positioning indication may be used to indicate whether a positioning mode for the first electronic tag device is the simplified positioning mode, or the simplified positioning indication may be used to indicate whether the simplified positioning mode is enabled for the first electronic tag device.

In embodiments of this application, the first information is used to determine whether a positioning mode for the first electronic tag device is the simplified positioning mode. The first information is transmitted between network element, so that the first electronic tag device is located in the simplified positioning mode, thereby reducing resource overheads of a communications system.

In this application, the first network element may receive the first information from the second network element in a plurality of manners, each of which is described below.

In Manner 1, the first network element may receive a first message from the second network element. Optionally, the first message may carry the first information. For example, the first message may be a subscription information reply message.

Subscription data of the first electronic tag device may be stored in the second network element. For example, a format and content of the subscription data may be shown in the following Table 1:

**Table 1 Definition of subscription data**

| Subscription data type | Domain of subscription data | Description of subscription data |
|---|---|---|
| Electronic tag positioning | Simplified positioning indication | When a device requesting to be located is an electronic tag, a simplified positioning mode is used. |

In Table 1, the domain of subscription data may indicate whether a positioning mode for an electronic tag device supports a simplified positioning mode. For example, a value of the simplified positioning indication may be 1 bit, and a value of 1 indicates that a simplified positioning mode is enabled, and a value of 0 indicates that a simplified positioning mode is disabled.

The second network element may determine the subscription information reply message based on the subscription data.

Optionally, before the second network element transmits the subscription information reply message, the first network element may transmit a subscription information query message to the second network element. Optionally, the subscription information query message may carry the identifier of the first electronic tag device.

Optionally, the first network element may be an AMF (or referred to as an AMF network element). Accordingly, the second network element may be a UDM (or referred to as a UDM network element).

With reference to FIG. 6, Manner 1 is described below by using an example in which the first network element is an AMF and the second network element is a UDM, in conjunction with a registration procedure of an electronic tag.

In S610, the electronic tag transmits a registration request message to the AMF.

A registration request may be used to request registration with a network (for example, a core network).

After the AMF receives the request, the AMF may interact with a network element in which subscription data (or referred to as subscription information) is stored, to obtain a simplified positioning indication for the electronic tag.

For example, as shown in S620, the network element in which the subscription data is stored may be the UDM.

In S620, the AMF transmits a subscription information query message to the UDM.

The subscription information query message may include an identifier of the electronic tag.

In S630, the UDM transmits a subscription information reply message to the AMF.

The subscription information reply message may include a simplified positioning indication.

Subscription information of the electronic tag may be stored in the UDM. For example, a format and content of the subscription data may be as shown in Table 1. Optionally, the UDM may determine the subscription information reply message based on the subscription data.

In S640, the AMF transmits a registration request accept message to the electronic tag.

The AMF may save the simplified positioning indication for the electronic tag and transmit the registration request accept message to the electronic tag.

In embodiments of this application, the first network element (for example, the AMF) may obtain the simplified positioning indication through the registration procedure of the electronic tag. Therefore, when subsequently receiving a positioning request, the first network element may transmit the simplified positioning indication to an LMF, so that the LMF triggers the simplified positioning mode, thereby reducing resource overheads of a communications system.

In Manner 2, the first network element may receive a response message from the second network element. Optionally, the response message may include first information. For example, the response message may be a subscription information query response message.

Subscription data of the first electronic tag device may be stored in the second network element. Optionally, the second network element may transmit the response message to the first network element based on the subscription data of the first electronic tag device. For example, as shown in Table 1, the subscription data may include at least one of the following fields: a subscription data type, a domain of subscription data, or description of subscription data.

Optionally, the first network element may be a gateway mobile location center (gateway mobile location center, GMLC). Accordingly, the second network element may be a UDM.

In Manner 3, the first network element may receive a positioning request message for the first electronic tag device from the second network element. Optionally, the positioning request message may carry first information.

In Manner 3, the first network element may receive a first message from the second network element. Optionally, the first message may carry the first information. For example, the first message may be a positioning request message for the first electronic tag device. Optionally, the first message may further carry second information, and the second information may indicate a serving base station of the first electronic tag device.

The first network element may be an AMF. Accordingly, the second network element may be a GMLC.

In Manner 4, the first network element may receive a second message from the second network element. Optionally, the second message may carry first information. For example, the second message may be a positioning request message for the first electronic tag device. Optionally, the second message may further carry second information, and the second information may indicate a serving base station of the first electronic tag device.

The first network element may be a location management function (location management function, LMF). Accordingly, the second network element may be an AMF.

In Manner 5, the first network element may receive a positioning method indication message for the first electronic tag device from the second network element. Optionally, the positioning method indication message may include the first information.

Optionally, the first network element may be a base station, for example, the first network element may be a serving base station of the first electronic tag device. Accordingly, the second network element may be an LMF.

With reference to FIG. 7, Manner 2, Manner 3, Manner 4, and Manner 5 are each described below by using an example in conjunction with a procedure in which a core network selects a simplified positioning mode.

In S710, an AF transmits a positioning request message to a GMLC.

For example, when the AF of a third party expects to obtain a location of an electronic tag (for example, a target electronic tag), the AF may transmit a positioning request message for the target electronic tag to the GMLC. The positioning request message may include an identifier of the target electronic tag, and may further include a positioning accuracy requirement.

In S720, the GMLC transmits a subscription information query message to a UDM.

The subscription information query message may be used to search for a positioning-related subscription message for the target electronic tag.

In S730, the UDM transmits a subscription information query response message to the GMLC.

The UDM may transmit the subscription information query response message to the GMLC based on stored subscription data. The subscription information query response message may include a simplified positioning indication for the target electronic tag, and may further include an identifier of the target electronic tag.

In S740, the GMLC transmits a positioning request message for the target electronic tag to an AMF.

The positioning request message may be used to request to locate the target electronic tag in a simplified positioning mode. The positioning request message may include a simplified positioning indication for the target electronic tag, and may further include an identifier of the target electronic tag.

In S750, the AMF determines an LMF for which a simplified positioning mode is enabled.

The AMF may select, in response to the simplified positioning indication (which may be transmitted by the GMLC in S740, or may be transmitted by the UDM in S630), the LMF for which the simplified positioning mode is enabled.

In S760, the AMF transmits a positioning request message to the LMF.

The LMF may be the LMF, selected in S750, for which the simplified positioning mode is enabled. The positioning request message may include at least one of the following: an identifier of the target electronic tag, a positioning accuracy requirement, a simplified positioning indication, or an identifier of a serving base station corresponding to the target electronic tag.

Optionally, the AMF may maintain a correspondence between an electronic tag and a serving base station corresponding to the electronic tag in a registration process of the electronic tag. Therefore, the AMF may determine the identifier of the serving base station corresponding to the electronic tag.

In S770, the LMF selects a simplified positioning method.

The LMF may select the simplified positioning method in response to the simplified positioning indication.

If the LMF receives no simplified positioning indication, the LMF may determine the simplified positioning method based on the positioning accuracy requirement carried in the positioning request message and configuration of the LMF. For example, if the positioning accuracy requirement indicates that positioning accuracy is 10 meters (which indicates that the accuracy requirement is not high), the LMF may determine to select the simplified positioning method to locate the electronic tag.

In S780, the LMF transmits a positioning method indication message to a base station.

Optionally, the positioning method indication message may include the simplified positioning method selected in S770.

In embodiments of this application, a network side determines to locate the electronic tag in the simplified positioning mode, so as to avoid resource waste caused by triggering a conventional positioning mode, thereby reducing resource overheads of the communications system.

In some embodiments, the first network element may transmit a first signal to the first electronic tag device based on the first information. Accordingly, the first network element may receive a backscatter signal of the first signal from the first electronic tag device. Optionally, the first network element may be a base station, for example, a serving base station of the first electronic tag device.

Optionally, the first network element may determine a distance and/or an angle between the first network element and the first electronic tag device based on the backscatter signal. For example, the first network element may determine the distance and/or the angle between the first network element and the first electronic tag device through ranging and/or sidelink positioning described above. Optionally, the first network element may be a base station, for example, a serving base station of the first electronic tag device.

Optionally, the first network element may transmit third information to the second network element. Optionally, the third information may indicate a distance and/or an angle between the first network element and the first electronic tag device. Optionally, the first network element may be a base station, for example, a serving base station of the first electronic tag device. Accordingly, the second network element may be an LMF.

Further, the second network element may calculate a location of the electronic tag based on the distance and/or the angle between the first network element and the first electronic tag device and a location of the first network element.

Optionally, the first network element determines a location of the first electronic tag device based on the distance and/or angle between the first network element and the first electronic tag device and the location of the first network element.

Further, the first network element may transmit the third information to the second network element. Optionally, the third information may indicate the location of the first electronic tag device. Optionally, the first network element may be a base station, for example, a serving base station of the first electronic tag device. Accordingly, the second network element may be an LMF.

Optionally, the first network element may transmit a positioning request reply message for the first electronic tag device to the second network element. Optionally, the positioning request reply message may include the third information.

Optionally, before the foregoing embodiment, the second network element may transmit a positioning method indication message for the first electronic tag device to the first network element. Optionally, the positioning method indication message may include the first information. Optionally, the first network element may be a base station, for example, a serving base station of the first electronic tag device. Accordingly, the second network element may be an LMF.

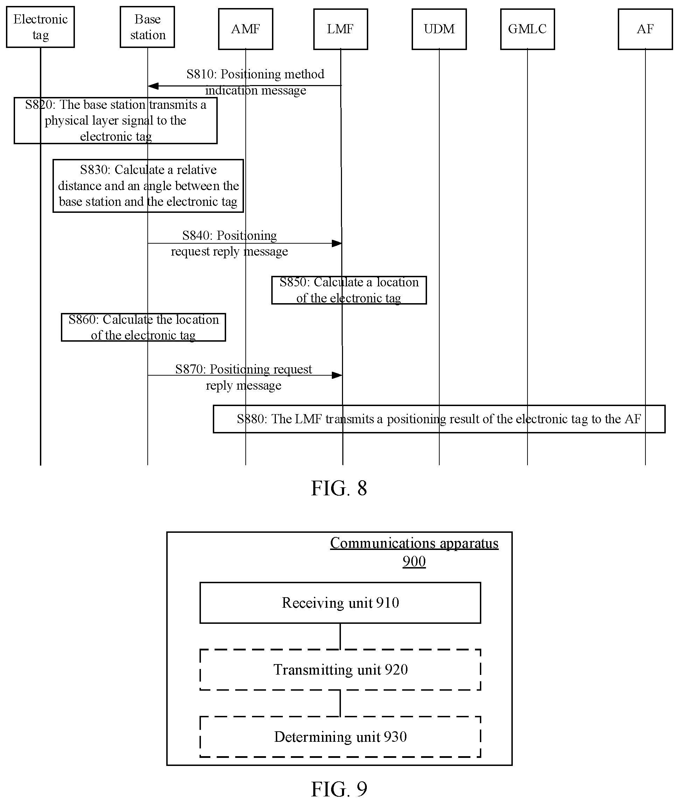

With reference to FIG. 8, the foregoing embodiment is described below by using an example in conjunction with an execution procedure of a simplified positioning method.

In S810, the LMF transmits a positioning method indication message to the base station.

Optionally, the positioning method indication message may include a simplified positioning method selected by the LMF.

For example, as shown in FIG. 7, after the LMF selects the simplified positioning method, the LMF may transmit only the simplified positioning method to a serving base station of the electronic tag, that is, only the serving base station is required to locate the electronic tag. However, in a conventional positioning mode, at least three base stations are required to locate the LTE, so as to ensure positioning accuracy. Therefore, the positioning method in this application can reduce resource overheads of the communications system.

In S820, the base station transmits a physical layer signal to the electronic tag.

After receiving the simplified positioning indication and the positioning request message, the base station may transmit the physical layer signal to the electronic tag.

In S830, the base station calculates a relative distance and an angle between the base station and the electronic tag.

The base station may calculate the relative distance and the angle between the base station and the electronic tag based on a backscatter signal of the physical layer signal.

In this case, the LMF may calculate a location of the electronic tag, for example, as shown in S840 and S850 below.

In S840, the base station transmits a positioning request reply message to the LMF.

The positioning request reply message may carry the relative distance and the angle between the base station and the electronic tag.

In S850, the LMF calculates a location of the electronic tag.

The LMF may calculate an absolute location of the electronic tag based on a location of the base station and the relative distance and the angle between the base station and the electronic tag.

Alternatively, the location of the electronic tag may be calculated by the base station, for example, as shown in S860 and S870 below.

In S860, the base station calculates a location of the electronic tag.

The base station may calculate an absolute location of the electronic tag based on a location of the base station and the relative distance and the angle between the base station and the electronic tag.

In S870, the base station transmits a positioning request reply message to the LMF.

The positioning request reply message may carry the absolute location of the electronic tag.

In S880, the LMF transmits a positioning result of the electronic tag to the AF.

The LMF may transmit the positioning result of the electronic tag to the AF via the AMF and the GMLC based on an existing procedure.

In embodiments of this application, the electronic tag may be located by using only one base station, which may effectively reduce resource overheads of the communications system. Further, the positioning calculation mode based on the base station or the LMF is used, so that the electronic tag is unnecessary to have a positioning calculation capability, thereby reducing energy consumption and capability requirements of the electronic tag, which complies with a design principle of the electronic tag.

The method embodiments of this application are described in detail above with reference to FIG. 1 to FIG. 8. Apparatus embodiments of this application are described in detail below with reference to FIG. 9 to FIG. 11. It should be understood that the descriptions of the method embodiments correspond to descriptions of the apparatus embodiments, and therefore, for parts that are not described in detail, reference may be made to the foregoing method embodiments.

FIG. 9 is a schematic structural diagram of a communications apparatus according to an embodiment of this application. As shown in FIG. 9, the apparatus 900 includes a receiving unit 910. Details are as follows.

The receiving unit 910 is configured to receive first information from a second network element, where the first information is used to determine whether a positioning mode for a first electronic tag device is a simplified positioning mode.

Optionally, the first information includes a simplified positioning indication and/or an identifier of the first electronic tag device.

Optionally, the receiving unit 910 is specifically configured to receive a response message from the second network element, where the response message includes the first information.

Optionally, the apparatus 900 is a gateway mobile location center GMLC network element.

Optionally, the second network element is a unified data management function UDM network element.

Optionally, the receiving unit 910 is specifically configured to receive a first message from the second network element, where the first message carries the first information.

Optionally, the first message is a subscription information reply message.

Optionally, the second network element is a unified data management function UDM network element.

Optionally, the first message is a positioning request message for the first electronic tag device.

Optionally, the second network element is a gateway mobile location center GMLC network element.

Optionally, the apparatus 900 is an access and mobility management function AMF network element.

Optionally, the second network element is an AMF network element.

Optionally, the apparatus 900 is a location management function LMF network element.

Optionally, the receiving unit 910 is specifically configured to receive a positioning method indication message for the first electronic tag device from the second network element, where the positioning method indication message includes the first information.

Optionally, the apparatus 900 is a base station.

Optionally, the apparatus 900 further includes a transmitting unit 920, configured to transmit a first signal to the first electronic tag device based on the first information; and the receiving unit 910 is further configured to receive a backscatter signal of the first signal from the first electronic tag device.

Optionally, the apparatus 900 further includes a determining unit 930, configured to determine a distance and/or an angle between the apparatus and the first electronic tag device based on the backscatter signal.

Optionally, the transmitting unit 920 is further configured to transmit third information to the second network element, where the third information indicates the distance and/or the angle between the apparatus and the first electronic tag device.

Optionally, the determining unit 930 is further configured to determine a location of the first electronic tag device based on the distance and/or the angle between the apparatus and the first electronic tag device.

Optionally, the transmitting unit 920 is further configured to transmit third information to the second network element, where the third information indicates the location of the first electronic tag device.

Optionally, the transmitting unit 920 is specifically configured to transmit a positioning request reply message for the first electronic tag device to the second network element, where the positioning request reply message includes the third information.

Optionally, the second network element is a location management function LMF network element.

Optionally, the simplified positioning mode is enabled for the LMF network element.

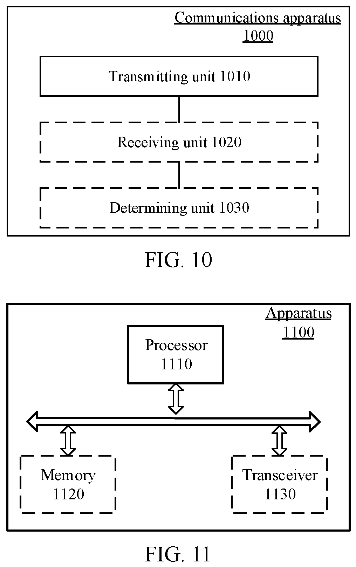

FIG. 10 is a schematic structural diagram of a communications apparatus according to an embodiment of this application. As shown in FIG. 10, the apparatus 1000 includes a transmitting unit 1010. Details are as follows.

The transmitting unit 1010 is configured to transmit first information to a first network element, where the first information is used to determine whether a positioning mode for a first electronic tag device is a simplified positioning mode.

Optionally, the first information includes a simplified positioning indication and/or an identifier of the first electronic tag device.

Optionally, the transmitting unit 1010 is specifically configured to transmit a response message to the first network element, where the response message includes the first information.

Optionally, the transmitting unit 1010 is specifically configured to transmit the response message to the first network element based on subscription data of the first electronic tag device, where the subscription data includes at least one of the following fields: a subscription data type, a domain of subscription data, or description of subscription data.

Optionally, the first network element is a gateway mobile location center GMLC network element.

Optionally, the transmitting unit 1010 is specifically configured to transmit a first message to the first network element, where the first message carries the first information.

Optionally, the first message is a subscription information reply message.

Optionally, the first network element is an access and mobility management function AMF network element.

Optionally, the apparatus 1000 is a unified data management function UDM network element.

Optionally, the first message is a positioning request message for the first electronic tag device.

Optionally, the first message further carries second information, and the second information indicates a serving base station of the first electronic tag device.

Optionally, the apparatus 1000 is a gateway mobile location center GMLC network element.

Optionally, the first network element is an AMF network element.

Optionally, the apparatus 1000 is an AMF network element.

Optionally, the first network element is a location management function LMF network element.

Optionally, the transmitting unit 1010 is specifically configured to transmit a positioning method indication message for the first electronic tag device to the first network element, where the positioning method indication message carries the first information.

Optionally, the first network element is a base station.

Optionally, the apparatus 1000 is an LMF network element.

Optionally, the simplified positioning mode is enabled for the LMF network element.

Optionally, the transmitting unit 1010 is specifically configured to: when a simplified positioning indication for the first electronic tag device is received by the apparatus from another network element, transmit the first information to the first network element.

Optionally, the transmitting unit 1010 is specifically configured to: when no simplified positioning indication for the first electronic tag device is received by the apparatus from another network element, transmit the first information to the first network element based on a positioning accuracy requirement for the first electronic tag device.

Optionally, the apparatus 1000 further includes a receiving unit 1020, configured to receive third information from the first network element, where the third information is used to indicate a distance and/or an angle between a serving base station of the first electronic tag device and the first electronic tag device.

Optionally, the apparatus 1000 further includes a determining unit 1030, configured to determine a location of the first electronic tag device based on a location of the serving base station of the first electronic tag device and the third information.

Optionally, the apparatus 1000 further includes a receiving unit 1020, configured to receive third information from the first network element, where the third information indicates the location of the first electronic tag device.

Optionally, the receiving unit 1020 is specifically configured to receive a positioning request reply message for the first electronic tag device from the first network element, where the positioning request reply message includes the third information.

FIG. 11 is a schematic structural diagram of an apparatus according to an embodiment of this application. Dashed lines in FIG. 11 indicate that the unit or module is optional. The apparatus 1100 may be configured to implement the method described in the foregoing method embodiments. The apparatus 1100 may be a chip or a communications apparatus.

The apparatus 1100 may include one or more processors 1110. The processor 1110 may support the apparatus 1100 in implementing the method described in the foregoing method embodiments. The processor 1110 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1100 may further include one or more memories 1120. The memory 1120 stores a program, where the program may be executed by the processor 1110, to cause the processor 1110 to perform the method described in the foregoing method embodiments. The memory 1120 may be separate from the processor 1110 or may be integrated into the processor 1110.

The apparatus 1100 may further include a transceiver 1130. The processor 1110 may communicate with another device or chip by using the transceiver 1130. For example, the processor 1110 may transmit data to and receive data from another device or chip by using the transceiver 1130.

An embodiment of this application further provides a computer-readable storage medium, configured to store a program. The computer-readable storage medium may be applied to the communications apparatus provided in embodiments of this application, and the program causes a computer to perform the method executed by the communications apparatus in various embodiments of this application.

An embodiment of this application further provides a computer program product. The computer program product includes a program. The computer program product may be applied to the communications apparatus provided in embodiments of this application, and the program causes a computer to perform the method executed by the communications apparatus in various embodiments of this application.

An embodiment of this application further provides a computer program. The computer program may be applied to the communications apparatus provided in embodiments of this application, and the computer program causes a computer to perform the method executed by the communications apparatus in various embodiments of this application.

It should be understood that, in embodiments of this application, "B that is corresponding to A" means that B is associated with A, and B may be determined based on A. However, it should be further understood that determining B according to A does not mean determining B according to A only, and may further determine B according to A and/or other information.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

It should be understood that, in embodiments of this application, sequence numbers of the foregoing processes do not mean execution sequences. The execution sequences of the processes should be determined based on functions and internal logic of the processes, and should not be construed as any limitation on the implementation processes of the embodiments of this application.

In the several embodiments provided in this application, it should be understood that the disclosed system, apparatus, and method may be implemented in another manner. For example, the apparatus embodiments described above are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented as indirect couplings or communication connections through some interface, apparatuses or units, and may be implemented in electrical, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first network element, first information from a second network element, wherein the first information is used to determine whether a positioning mode for a first electronic tag device is a simplified positioning mode.

2. The method according to claim 1, wherein the first information comprises a simplified positioning indication and/or an identifier of the first electronic tag device.

3. The method according to claim 1 or 2, wherein the receiving, by the first network element, the first information from the second network element comprises:
receiving, by the first network element, a response message from the second network element, wherein the response message comprises the first information.

4. The method according to claim 3, wherein the first network element is a gateway mobile location center GMLC network element.

5. The method according to claim 3 or 4, wherein the second network element is a unified data management function UDM network element.

6. The method according to claim 1 or 2, wherein the receiving, by the first network element, the first information from the second network element comprises:
receiving, by the first network element, a first message from the second network element, wherein the first message carries the first information.

7. The method according to claim 6, wherein the first message is a subscription information reply message.

8. The method according to claim 6 or 7, wherein the second network element is a unified data management function UDM network element.

9. The method according to claim 6, wherein the first message is a positioning request message for the first electronic tag device.

10. The method according to claim 6 or 9, wherein the second network element is a gateway mobile location center GMLC network element.

11. The method according to any one of claims 6 to 10, wherein the first network element is an access and mobility management function AMF network element.

12. The method according to claim 6 or 9, wherein the second network element is an access and mobility management function AMF network element.

13. The method according to claim 6, 9, or 12, wherein the first network element is a location management function LMF network element.

14. The method according to claim 1 or 2, wherein the receiving, by the first network element, the first information from the second network element comprises:
receiving, by the first network element, a positioning method indication message for the first electronic tag device from the second network element, wherein the positioning method indication message comprises the first information.

15. The method according to claim 14, wherein the first network element is a base station.

16. The method according to claim 15, further comprising:
transmitting, by the first network element, a first signal to the first electronic tag device based on the first information; and
receiving, by the first network element, a backscatter signal of the first signal from the first electronic tag device.

17. The method according to claim 16, further comprising:
determining, by the first network element, a distance and/or an angle between the first network element and the first electronic tag device based on the backscatter signal.

18. The method according to claim 17, further comprising:
transmitting, by the first network element, third information to the second network element, wherein the third information indicates the distance and/or the angle between the first network element and the first electronic tag device.

19. The method according to claim 17, further comprising:
determining, by the first network element, a location of the first electronic tag device based on the distance and/or the angle between the first network element and the first electronic tag device.

20. The method according to claim 19, further comprising:
transmitting, by the first network element, third information to the second network element, wherein the third information indicates the location of the first electronic tag device.

21. The method according to claim 18 or 20, wherein the transmitting, by the first network element, the third information to the second network element comprises:
transmitting, by the first network element, a positioning request reply message for the first electronic tag device to the second network element, wherein the positioning request reply message comprises the third information.

22. The method according to any one of claims 14 to 21, wherein the second network element is a location management function LMF network element.

23. The method according to claim 13 or 22, wherein the simplified positioning mode is enabled for the LMF network element.

24. A communication method, comprising:
transmitting, by a second network element, first information to a first network element, wherein the first information is used to determine whether a positioning mode for a first electronic tag device is a simplified positioning mode.

25. The method according to claim 24, wherein the first information comprises a simplified positioning indication and/or an identifier of the first electronic tag device.

26. The method according to claim 24 or 25, wherein the transmitting, by the second network element, the first information to the first network element comprises:
transmitting, by the second network element, a response message to the first network element, wherein the response message comprises the first information.

27. The method according to claim 26, wherein the transmitting, by the second network element, the response message to the first network element comprises:
transmitting, by the second network element, the response message to the first network element based on subscription data of the first electronic tag device, wherein the subscription data comprises at least one of following fields: a subscription data type, a domain of subscription data, or description of subscription data.

28. The method according to claim 26 or 27, wherein the first network element is a gateway mobile location center GMLC network element.

29. The method according to claim 24 or 25, wherein the transmitting, by the second network element, the first information to the first network element comprises:
transmitting, by the second network element, a first message to the first network element, wherein the first message carries the first information.

30. The method according to claim 29, wherein the first message is a subscription information reply message.

31. The method according to claim 29 or 30, wherein the first network element is an access and mobility management function AMF network element.

32. The method according to any one of claims 26 to 31, wherein the second network element is a unified data management function UDM network element.

33. The method according to claim 29, wherein the first message is a positioning request message for the first electronic tag device.

34. The method according to claim 29 or 33, wherein the first message further carries second information, and the second information indicates a serving base station of the first electronic tag device.

35. The method according to claim 29, 33, or 34, wherein the second network element is a gateway mobile location center GMLC network element.

36. The method according to claim 29, 33, 34, or 35, wherein the first network element is an access and mobility management function AMF network element.

37. The method according to claim 29, 33, or 34, wherein the second network element is an access and mobility management function AMF network element.

38. The method according to claim 29, 33, 34, or 37, wherein the first network element is a location management function LMF network element.

39. The method according to claim 24 or 25, wherein the transmitting, by the second network element, the first information to the first network element comprises:
transmitting, by the second network element, a positioning method indication message for the first electronic tag device to the first network element, wherein the positioning method indication message carries the first information.

40. The method according to claim 39, wherein the first network element is a base station.

41. The method according to claim 39 or 40, wherein the second network element is an LMF network element.

42. The method according to claim 38 or 41, wherein the simplified positioning mode is enabled for the LMF network element.

43. The method according to any one of claims 24 to 42, wherein the transmitting, by the second network element, the first information to the first network element comprises:
when a simplified positioning indication for the first electronic tag device is received by the second network element from another network element, transmitting, by the second network element, the first information to the first network element.

44. The method according to any one of claims 24 to 43, wherein the transmitting, by the second network element, the first information to the first network element comprises:
when no simplified positioning indication for the first electronic tag device is received by the second network element from another network element, transmitting, by the second network element, the first information to the first network element based on a positioning accuracy requirement for the first electronic tag device.

45. The method according to any one of claims 24 to 44, further comprising:
receiving, by the second network element, third information from the first network element, wherein the third information is used to indicate a distance and/or an angle between a serving base station of the first electronic tag device and the first electronic tag device.

46. The method according to claim 45, further comprising:
determining, by the second network element, a location of the first electronic tag device based on a location of the serving base station of the first electronic tag device and the third information.

47. The method according to any one of claims 24 to 44, further comprising:
receiving, by the second network element, third information from the first network element, wherein the third information indicates a location of the first electronic tag device.

48. The method according to any one of claims 45 to 47, wherein the receiving, by the second network element, the third information from the first network element comprises:
receiving, by the second network element, a positioning request reply message for the first electronic tag device from the first network element, wherein the positioning request reply message comprises the third information.

49. A communications apparatus, comprising:
a receiving unit, configured to receive first information from a second network element, wherein the first information is used to determine whether a positioning mode for a first electronic tag device is a simplified positioning mode.

50. The apparatus according to claim 49, wherein the first information comprises a simplified positioning indication and/or an identifier of the first electronic tag device.

51. The apparatus according to claim 49 or 50, wherein the receiving unit is specifically configured to receive a response message from the second network element, wherein the response message comprises the first information.

52. The apparatus according to claim 51, wherein the apparatus is a gateway mobile location center GMLC network element.

53. The apparatus according to claim 51 or 52, wherein the second network element is a unified data management function UDM network element.

54. The apparatus according to claim 49 or 50, wherein the receiving unit is specifically configured to receive a first message from the second network element, wherein the first message carries the first information.

55. The apparatus according to claim 54, wherein the first message is a subscription information reply message.

56. The apparatus according to claim 54 or 55, wherein the second network element is a unified data management function UDM network element.

57. The apparatus according to claim 54, wherein the first message is a positioning request message for the first electronic tag device.

58. The apparatus according to claim 54 or 57, wherein the second network element is a gateway mobile location center GMLC network element.

59. The apparatus according to any one of claims 54 to 58, wherein the apparatus is an access and mobility management function AMF network element.

60. The apparatus according to claim 54 or 57, wherein the second network element is an access and mobility management function AMF network element.

61. The apparatus according to claim 54, 57, or 60, wherein the apparatus is a location management function LMF network element.

62. The apparatus according to claim 49 or 50, wherein the receiving unit is specifically configured to receive a positioning method indication message for the first electronic tag device from the second network element, wherein the positioning method indication message comprises the first information.

63. The apparatus according to claim 62, wherein the apparatus is a base station.

64. The apparatus according to claim 63, wherein the apparatus further comprises a transmitting unit, configured to transmit a first signal to the first electronic tag device based on the first information; and the receiving unit is further configured to receive a backscatter signal of the first signal from the first electronic tag device.

65. The apparatus according to claim 64, wherein the apparatus further comprises a determining unit, configured to determine a distance and/or an angle between the apparatus and the first electronic tag device based on the backscatter signal.

66. The apparatus according to claim 65, wherein the transmitting unit is further configured to transmit third information to the second network element, wherein the third information indicates the distance and/or the angle between the apparatus and the first electronic tag device.

67. The apparatus according to claim 65, wherein the determining unit is further configured to determine a location of the first electronic tag device based on the distance and/or the angle between the apparatus and the first electronic tag device.

68. The apparatus according to claim 67, wherein the transmitting unit is further configured to transmit third information to the second network element, wherein the third information indicates the location of the first electronic tag device.

69. The apparatus according to claim 66 or 68, wherein the transmitting unit is specifically configured to transmit a positioning request reply message for the first electronic tag device to the second network element, wherein the positioning request reply message comprises the third information.

70. The apparatus according to any one of claims 62 to 69, wherein the second network element is a location management function LMF network element.

71. The apparatus according to claim 61 or 70, wherein the simplified positioning mode is enabled for the LMF network element.

72. A communications apparatus, comprising:
a transmitting unit, configured to transmit first information to a first network element, wherein the first information is used to determine whether a positioning mode for a first electronic tag device is a simplified positioning mode.

73. The apparatus according to claim 72, wherein the first information comprises a simplified positioning indication and/or an identifier of the first electronic tag device.

74. The apparatus according to claim 72 or 73, wherein the transmitting unit is specifically configured to transmit a response message to the first network element, wherein the response message comprises the first information.

75. The apparatus according to claim 74, wherein the transmitting unit is specifically configured to transmit the response message to the first network element based on subscription data of the first electronic tag device, wherein the subscription data comprises at least one of following fields: a subscription data type, a domain of subscription data, or description of subscription data.

76. The apparatus according to claim 74 or 75, wherein the first network element is a gateway mobile location center GMLC network element.

77. The apparatus according to claim 72 or 73, wherein the transmitting unit is specifically configured to transmit a first message to the first network element, wherein the first message carries the first information.

78. The apparatus according to claim 77, wherein the first message is a subscription information reply message.

79. The apparatus according to claim 77 or 78, wherein the first network element is an access and mobility management function AMF network element.

80. The apparatus according to any one of claims 74 to 79, wherein the apparatus is a unified data management function UDM network element.

81. The apparatus according to claim 77, wherein the first message is a positioning request message for the first electronic tag device.

82. The apparatus according to claim 77 or 81, wherein the first message further carries second information, and the second information indicates a serving base station of the first electronic tag device.

83. The apparatus according to claim 77, 81, or 82, wherein the apparatus is a gateway mobile location center GMLC network element.

84. The apparatus according to claim 77, 81, 82, or 83, wherein the first network element is an access and mobility management function AMF network element.

85. The apparatus according to claim 77, 81, or 82, wherein the apparatus is an access and mobility management function AMF network element.

86. The apparatus according to claim 77, 81, 82, or 85, wherein the first network element is a location management function LMF network element.

87. The apparatus according to claim 72 or 73, wherein the transmitting unit is specifically configured to transmit a positioning method indication message for the first electronic tag device to the first network element, wherein the positioning method indication message carries the first information.

88. The apparatus according to claim 87, wherein the first network element is a base station.

89. The apparatus according to claim 87 or 88, wherein the apparatus is an LMF network element.

90. The apparatus according to claim 86 or 89, wherein the simplified positioning mode is enabled for the LMF network element.

91. The apparatus according to any one of claims 72 to 90, wherein the transmitting unit is specifically configured to: when a simplified positioning indication for the first electronic tag device is received from another network element, transmitting, by the apparatus, the first information to the first network element.

92. The apparatus according to any one of claims 72 to 91, wherein the transmitting unit is specifically configured to: when no simplified positioning indication for the first electronic tag device is received from another network element, transmitting, by the apparatus, the first information to the first network element based on a positioning accuracy requirement for the first electronic tag device.

93. The apparatus according to any one of claims 72 to 92, wherein the apparatus further comprises a receiving unit, configured to receive third information from the first network element, wherein the third information is used to indicate a distance and/or an angle between a serving base station of the first electronic tag device and the first electronic tag device.

94. The apparatus according to claim 93, wherein the apparatus further comprises a determining unit, configured to determine a location of the first electronic tag device based on a location of the serving base station of the first electronic tag device and the third information.

95. The apparatus according to any one of claims 72 to 92, wherein the apparatus further comprises a receiving unit, configured to receive third information from the first network element, wherein the third information indicates the location of the first electronic tag device.

96. The apparatus according to any one of claims 93 to 95, wherein the receiving unit is specifically configured to receive a positioning request reply message for the first electronic tag device from the first network element, wherein the positioning request reply message comprises the third information.

97. A communications apparatus, comprising a memory, a transceiver, and a processor, wherein the memory is configured to store a program, the processor is configured to perform data transmission and reception by using the transceiver, and the processor is configured to invoke the program in the memory to cause the communications apparatus to execute the method according to any one of claims 1 to 23.

98. A communications apparatus, comprising a memory, a transceiver, and a processor, wherein the memory is configured to store a program, the processor is configured to perform data transmission and reception by using the transceiver, and the processor is configured to invoke the program in the memory to cause the communications apparatus to execute the method according to any one of claims 24 to 48.

99. A chip, comprising a processor, configured to invoke a program from a memory to cause a device installed with the chip to execute the method according to any one of claims 1 to 23.

100. A chip, comprising a processor, configured to invoke a program from a memory to cause a device installed with the chip to execute the method according to any one of claims 24 to 48.

101. A computer-readable storage medium, wherein the computer-readable storage medium stores a program, and the program causes a computer to execute the method according to any one of claims 1 to 23.

102. A computer-readable storage medium, wherein the computer-readable storage medium stores a program, and the program causes a computer to execute the method according to any one of claims 24 to 48.

103. A computer program product, comprising a program, wherein the program causes a computer to execute the method according to any one of claims 1 to 23.

104. A computer program product, comprising a program, wherein the program causes a computer to execute the method according to any one of claims 24 to 48.

105. A computer program, wherein the computer program causes a computer to execute the method according to any one of claims 1 to 23.

106. A computer program, wherein the computer program causes a computer to execute the method according to any one of claims 24 to 48.
